# EUROPÄISCHE PATENTSCHRIFT

(11) **EP 2 683 793 B1**
(45) Veröffentlichungstag und Bekanntmachung des Hinweises auf die Patenterteilung: **14.12.2016**
(21) Anmeldenummer: 12707235.3
(22) Anmeldetag: 29.02.2012
(51) Int. Cl.: C09K 21/04, D06M 11/72, D06M 15/263, D06M 15/568

(54) **VEWENDUNG EINES STABILISATORS FÜR DIE HERSTELLUNG VON HALOGENFREIEN AMMONIUMPOLYPHOSPHAT ENTHALTENDEN FLAMMSCHUTZBESCHICHTUNGSZUSAMMENSETZUNGEN**
USE OF A STABILIZER FOR PRODUCING HALOGEN-FREE, AMMONIUM POLYPHOSPHATE-CONTAINING FLAME-RETARDANT COATING COMPOSITIONS
UTILISATION D'UN STABILISANT POUR LA PRODUCTION DE COMPOSITIONS DE REVÊTEMENT IGNIFUGES EXEMPTES D'HALOGÈNE, RENFERMANT UN POLYPHOSPHATE D'AMMONIUM

(30) Priorität: 05.03.2011 DE 102011013222
(43) Veröffentlichungstag der Anmeldung: 15.01.2014
(73) Patentinhaber: BK Giulini GmbH, 67065 Ludwigshafen (DE)
(72) Erfinder: STAFFEL, Thomas, 67269 Grünstadt (DE); STRAUB, Jürgen, 68305 Mannheim (DE); SCHMITT, Michael, 69124 Heidelberg (DE)
(86) Internationale Anmeldenummer: PCT/EP2012/000868
(87) Internationale Veröffentlichungsnummer: WO 2012/119717

(56) Entgegenhaltungen:
- DE-T2- 69 111 105
- US-A- 3 775 315
- US-A- 5 212 272

## Beschreibung

Diese Erfindung betrifft die Verwendung eines Stabilisators, der die Verträglichkeit des Bindemittels (Polymerdispersion) mit dem flüssigen Ammoniumpolyphosphat, kurz APP genannt, in einer Flammschutzbeschichtungszusammensetzung deutlich verbessert.

Das flüssige Ammoniumpolyphosphat fungiert in dieser
Flammschutzbeschichtungszusammensetzung als aktives flammhemmendes Agens. Die Flammschutzbeschichtungszusammensetzungen sind für alle Arten von Textilien, aber auch für Papier, Leder und Faserwerkstoffen gut geeignet.

Es handelt sich um unterschiedliche chemische Verbindungen, die sich beispielsweise in Kunststoffgehäusen von Fernsehern und Computern, Wohnraumtextilien, Dämm- und Montageschäumen befinden.

Es gibt im Stand der Technik folgende Typen von Flammschutzmitteln:
- Halogenierte Flammschutzmittel
- Stickstoffbasierte Flammschutzmittel
- Organophosphor-Flammschutzmittel
- Anorganische Flammschutzmittel

Brennende Textilien sind ein häufiges Phänomen, so z. B. in Wohnungen, in denen Teppiche Möbel oder Heimtextilien sich befinden. Aber auch Kleidung, besonders von Feuerwehrleuten, Kindern oder auch Küchenpersonal wird sehr häufig der Gefahr des Feuers ausgesetzt. In vielen industriellen Verfahren spielen Textilien eine große Rolle, die feuerfest ausgerüstet sein müssen. Auch in öffentlichen Verkehrsmitteln ist die Flammfestigkeit der Sitzbezüge und Polster sowie Bodenbeläge eine sehr wichtige Sicherheitsanforderung.

Bei der Bekämpfung eines bereits in Brand geratenen Textilmaterials gibt es einige Möglichkeiten, um den weiteren Brand zu verhindern, man kann einfach mit Wasser oder mit Sand oder auch einer Decke oder mit sog. Pulverlöschern, in denen sich häufig Natriumhydrogencarbonat unter Kohlendioxiddruck befindet, löschen. Der Mechanismus des Löschens besteht hier in der Erstickung der Flamme durch freiwerdendes Kohlendioxid, das durch den thermischen Zerfall des Natriumhydrogencarbonates gebildet wird. Die Flammschutzwirkung durch phosphorhaltige Flammschutzmittel wird hauptsächlich durch Bildung einer Deckschicht und Wasserabspaltung in der kondensierten Phase erzeugt. Intumeszenzfarben, die pulverförmiges Ammoniumpolyphosphat enthalten, wirken hauptsächlich durch das Ausbilden eines gegen Hitze isolierenden Schaums.

Im Stand der Technik sind Zusammensetzungen für Flammschutzbeschichtungen für Textilien oder Materialien wie oben genannt, bekannt. Sie enthalten neben einem z.B. halogenhaltigen aktiven Flammschutzmittel ein Bindemittel. Das Bindemittel ist in der Regel eine wässrige Polymerdispersion bestehend z. B. aus den Polymeren Polyurethan, Polyacrylat oder Vinylchlorid-Copolymeren. Als weitere Bestandteile enthalten diese Zusammensetzungen Hilfsstoffe, wie Vernetzer, Schaumstabilisatoren, Verdickungsmittel und aktive flammhemmende Agentien wie z.B. organische Brom und/oder Chlorverbindungen. Diese Agentien sind teilweise ökologisch problematisch, vor allem bromhaltige Flammschutzmittel, zu denen polybromierte Diphenylether (PBDE), Tetrabrombisphenol A (TBBPA) und Hexabromcyclododecan (HBCD) gehören. Sie sind seit langem im Einsatz in der Umwelt, aber chemisch schwer abbaubar und zum Teil bioakkumulierend, das heißt, sie reichern sich in Lebewesen an. TBBPA und HBCD sind toxisch für Gewässerorganismen. DecaBDE, TBBPA und HBCD wurden bereits in Muttermilch und im Blut des Menschen nachgewiesen. DecaBDE und HBCD stehen im Verdacht, langfristige toxische Wirkungen zu haben. Mehrere Gesetzesverordnungen wurden initiiert, um diese Mittel vom Markt zu verdrängen.

Auch die organophosphorhaltigen Flammschutzmittel, typischerweise aromatische und aliphatische Ester der Phosphorsäure, wie beispielsweise die unten aufgeführten sind problematisch in Bezug auf die Umwelt. Nachfolgend werden hier einige Vertreter aufgeführt.
- TCEP (Tris(chlorethyl)phosphat)
- TCPP (Tris(chlorpropyl)phosphat)
- TDCPP (Tris(dichlorisopropyl)phosphat)
- TPP (Triphenylphosphat)
- TEHP (Tris-(2-ethylhexyl)phosphat)
- TKP (Trikresylphosphat)
- ITP ("Isopropyliertes Triphenylphosphat") Mono-, Bis- und
   tris(isopropylphenyl)phosphate unterschiedlichen Isopropylierungsggrades
- RDP (Resorcinol-bis(diphenylphosphat))
- BDP (Bisphenol-A-bis(diphenylphosphat))

Diese Flammschutzmittel kommen beispielsweise bei weichen und harten Polyurethanschäumen, wie in Polstermöbeln, Fahrzeugsitzen oder Baumaterialien zum Einsatz.

Zu den bekannten anorganische Flammschutzmittel gehören beispielsweise:
- Aluminiumhydroxid (Al(OH)3), das weltweit am meisten eingesetzte Flammschutzmittel (auch ATH für "Aluminiumtrihydrat" genannt). Es wirkt, durch Abspaltung von Wasser, kühlend und gasverdünnend, muss aber in großen Anteilen (bis zu 60%) zugemischt werden.
- Magnesiumhydroxid (Mg(OH)₂, MDH, "Magnesiumdihydrat") ist ein mineralisches Flammschutzmittel mit höherer Temperaturbeständigkeit als ATH, aber mit gleicher Wirkungsweise.
- Ammoniumsulfat ((NH₄)₂SO₄) und -phosphat ((NH₄)₃PO₄) verdünnen das Gas in der Flamme durch Abspaltung von Ammoniak (NH₃), welches zu Wasser und unterschiedlichen Stickoxiden verbrennt und der Flamme dadurch den Sauerstoff entzieht. Gleichzeitig bewirken sie die Bildung einer Schutzschicht durch die entstehende Schwefel- (H₂SO₄) bzw. Phosphorsäure (H₃PO₄), die als eine ihrer Funktionen die Radikalkettenreaktion unterbrechen können. Die Säuren sind außerdem nicht brennbar, stark hygroskopisch und besitzen hohe Siedepunkte. Daher kondensieren sie im kühleren Bereich der Flamme und schlagen sich auf dem Material nieder. Phosphorsäure bildet durch Wasserabspaltung zusätzlich Meta- und Polyphosphorsäuren, welche noch höhere Siedepunkte besitzen.
- Roter Phosphor bildet eine Schicht aus Phosphor- und Polyphosphorsäuren auf der Oberfläche und lässt diese aufquellen (Intumeszenz). Diese Schicht wirkt isolierend und schützt das Material vor Sauerstoffzutritt. Die hier gebildeten Phosphate haben die gleichen Eigenschaften wie die aus dem Ammoniumphosphat stammenden Ammoniumpolyphosphate.
- Antimontrioxid (Sb₂O₃) wirkt nur als Synergist in Kombination mit halogenierten Flammschutzmitteln. Nachteilig ist seine katalytische Wirkung bei der Dioxin-Entstehung im Brandfall.
- Antimonpentoxid (Sb₂O₅) wirkt, ähnlich wie Sb₂O₃, als Synergist.
- Zinkborate (siehe Borate) wirken unter anderem durch Wasserabgabe des Borates kühlend und gasverdünnend. Zinkverbindungen können aber auch synergetisch wirken und teilweise das gefährlichere Antimontrioxid ersetzen.
- Gelöschter Kalk (Ca(OH)₂) wurde während des 2. Weltkriegs als Flammschutzmittel für das Holz der Dachstühle verwendet. Es bindet zunächst unter Wasserabspaltung Kohlendioxid aus der Luft und geht in Calciumcarbonat (CaCO₃) über. Als Schutzanstrich erschwert es den Zutritt

Es sind auch schon Ammoniumpolyphosphatlösungen als aktive Flammschutzmittel bekannt. In der DE 10 2008 021 027 werden lösliche Ammoniumpolyphosphatlösungen vorgestellt. Diese Lösungen sind sehr gut für den vorgenannten Zweck geeignet nämlich Textilien aller Art feuerfest auszurüsten. Alleine als wässrige Lösung auf die Textilien aufgebracht, können sie jedoch nicht tief genug in die Fasern eindringen und außerdem selbst, wenn man die Textilien damit behandelt, würden diese sehr steif und schwer werden, würden fleckig sein und hätten sehr schlechte Trageeigenschaften. Mit der Zeit wird das Ammoniumpolyphosphat mit der Zeit durch Waschen aus den Textilstrukturen herausgewaschen.

Es wurde in der DE69111195T2 eine flammhemmende Zusammensetzung für Baumwollstoffe oder allg. Textilien und ein Verfahren zum Auftragen dieser Zusammensetzung beschrieben. Insbesondere war es eine Aufgabe, eine sog. rückseitige Beschichtung der Textilien (back coating) und eine dazu geeignete Zusammensetzung anzubieten.

In der US 3775 315 A wir eine Verfahren zur Herstellung von Ammoniumpolyphosphaten offenbar, das von den Ausgangsverbindungen Harnstoff, Phosphorsäure. Dieses Verfahren unterscheidet sich von den Verfahren des Standes der Technik, siehe auch unter Spalte 1, ab 26 ff. Nach dem US Verfahren hergestellte Produkte sind unter anderen als modifizierte Ammoniumpolyphosphate verwendbar in flüssigen Düngemitteln, oder in ihrer unlöslichen Form als feuerhemmende Stoffe in sog. Intumeszenzfarben und in Feuerlöschern.

In US 5,212,272 werden Polyacryl Polymere beschrieben, die sich als Textilzusatzmittel eignen. Diese Polymere sind keine Ammoniumpolyphosphate gemäß der vorliegenden Erfindung, oder enthalten welche, obgleich sie auch als feuerhemmende Stoffe für Textilien benutzt werden können, siehe Bsp. 17, Spalte 16, Zeilen 38 ff.

Deshalb muss man für die Behandlung de Textilien stets eine geeignete Flammschutzbeschichtungszusammensetzung verwenden, umfassend unter anderem das Bindemittel (Polymerdispersion) und ein flüssiges Ammoniumpolyphosphat.

Die wesentlichen Ausgangsstoffe sind Kunststoff-Monomere, Schutzkolloid und/oder Emulgator, Initiator. Durch Polymerisation der Monomere erhält man die entsprechenden Bindemittel in Form einer Polymerdispersion. Diese Bindemittel sind für die verbesserte Haftung der Flaminschutzbeschichtungszusammensetzung an den Substraten verantwortlich.

Die Bindemittel (Polymerdispersionen) auf Polyurethan-, Vinylacetat- oder Polyäcrylatbasis sind jedoch mit dem flüssigen Ammoniumpolyphosphat unverträglich, es kommt zu einer irreversiblen Koagulation bzw. Ausflockung. Vermutlich geschieht diese Koagulation durch Schädigung des Stabilisatorsystems bestehend aus Schutzkolloid bzw. Emulgator.

Es bestand daher die Aufgabe, eine Möglichkeit zu finden, diese Unverträglichkeit der beiden Bestandteile, nämlich des flüssigen Ammoniumpolyphosphätes und mit dem Bindemittel (Polymerdispersionen) zu beseitigen.

Es wurde überraschenderweise festgestellt, dass bei der Verwendung eines Alkylbenzolsulfonates, das zum Bindemittel (Polymerdispersion) zugegeben wird, das Phänomen der Koagulation und Ausflockung nicht mehr auftritt, die Polymerdispersionen lassen sich gut handhaben und die damit hergestellten Flammschutzbeschichtungszusammensetzungen dauerhaft auf alle Substrate homogen aufbringen.

Die Erfindung ist durch die hier aufgeführten Ansprüche näher spezifiziert:
1. Verwendung des Natrium,- Kalium- und/oder Ammoniumsalzes der p-Cumolsulfonsäure als Bindemittelstabilisator in halogenfreien, flüssigen Ammoniumpolyphosphat enthaltenden Flammschutzbeschichtungszusammensetzungen, wobei das genannte Salz in Mengen von 1: 10 bis 1: 30, bezogen auf das Bindemittel (Polymerdispersion) in den Zusammensetzungen enthalten ist.
2. Verwendung nach Anspruch 1, dadurch gekennzeichnet, dass das Verhältnis von Bindemittel (Polymerdispersion) zu flüssigem Ammoniumpolyphosphat (APP) in der Dispersion 1,3:1 bis 1:5 beträgt.
3. Verwendung nach Anspruch 1, dadurch gekennzeichnet, dass das flüssige Ammoniumpolyphosphat (APP) erhältlich ist, in dem man eine Polyphosphorsäure der Zusammensetzung (Hₙ₊₂ Pₙ O₃ₙ₊₁ mit n= 1 bis 50 und einer Phosphationenverteilung von P1 bis P3 bis 20 Gew.- % und P4 bis P50 von 70 bis 90 Gew.-% mit einer wässerigen 10 bis 30 Gew.-%-igen Ammoniaklösung und/oder mit Ammoniakgas bis maximal 60 °C und bis zur Erreichung des pH-Wert Bereiches von 6,5, bis 7,5 vermischt, die so erhaltene Lösung auf Raumtemperatur abkühlt, so dass ein klares, flüssiges Ammoniumpolyphosphat der Formel (NH₄PO₃)n mit n=1 bis 50 und mit einem Feststoffgehalt bis 50 Gew.- % mit einem pH- Wert von 6,5 bis 7,5 und einer Dichte von 1,1 bis 1,3 g/ml und einem P4 bis P50 Anteil von 60 bis 90 Gew.-% , bevorzugt 70 bis 80 Gew.-% , resultiert.
4. Verwendung der Flammschutzbeschichtungszusammensetzungen nach den Ansprüchen 1 bis 3, dadurch gekennzeichnet, dass diese Zusammensetzungen durch Tränken, Besprühen, Tauchen, Imprägnieren und Rakeln in einer Menge von 10 bis 500 g /m² auf die Substrate aufgebracht werden.

Diese Verbindungen sind kommerziell erhältlich.

Im Rahmen der vorliegenden Erfindung versteht man unter flüssigem Ammoniumpolyphosphat nur solche Verbindungen, die in der flüssigen Form hergestellt wurden, d.h. keine Lösungen , die durch Auflösung eines pulverförmigen, festen Ammoniumpolyphosphates in wasser entstehen, denn die Löslichkeit ist sehr gering, es beträgt lediglich nur 1 %.

Diese Alkylbenzolsulfonate stabilisieren das Bindemittel (Polymerdispersion) gegen Koagulation in den Flammschutzbeschichtungszusammensetzungen.

Das mit einer solchen Zusammensetzung behandelte textile Substrat weist vor allem einen fast unveränderten weichen Griff auf. Dies bedingt auch gute Trageeigenschaften der damit hergestellten Kleidungsstücke bzw. gute Verarbeitbarkeit der Textilien z.B. in der Herstellung von Auto- oder Möbelbezügen. Die Erfindung bezieht sich generell auf die Ausrüstung von Textilien aller Art, wie Gewebe, Gewirke, Maschenware, Gelege und Vliesstoffe auf Basis von Naturfasern wie, pflanzliche Fasern, Cellulosefasern, Pflanzeneiweißfasern, Zellstoff-Papierfasern, Gummifasern und Alginatfasern, sowie tierische Fasern, wie Wolle und Haare, Leder und Lederfasern, Fasern auf Basis von Chemiefasern, Polymerisationsfasern, Polykondensationsfasern und Polyadditionsfasern.

Erfindungsgemäß eignet sich bevorzugt p-Cumolsulfonsäure in Form ihrer Na und/oder K-Salze als Stabilisator für das Bindemittel (Polymerdispersion) in den Flammschutzbeschichtungszusammensetzungen.

### Erfindungsgemäße Rezepturen:

| | | |
|---|---|---|
| **1.** | 20 g | Polyurethandispersion Hydran® HW 930 (Bindemittel) |
| | 2 g | Na-Cumolsulfonat (Stabilisator) |
| | 20 g | Ammoniumpolyphosphat flüssig gemäß Anspruch 3 |
| | 10 g | Wasser deionisiert |
| | | |
| **2.** | 20 g | Polyurethandispersion Evafanol® HA-107 C (Bindemittel) |
| | 2 g | Na-Cumolsulfonat (Stabilisator) |
| | 20 g | Ammoniumpolyphosphat flüssig gemäß Anspruch 3 |
| | 10 g | Wasser deionisiert |
| | | |
| **3.** | 20 g | Acrylatdispersion Acronal® A 509 (Bindemittel) |
| | 2 g | Na-Cumolsulfonat (Stabilisator) |
| | 20 g | Ammoniumpolyphosphat flüssig gemäß Anspruch 3 |
| | 10 g | Wasser deionisiert |
| | | |
| **4.** | 20 g | Vinylacetat-Ethylendispersion Mowilith® LDM 1880 (Bindemittel) |
| | 2 g | Na-Cumolsulfonat (Stabilisator) |
| | 20 g | Ammoniumpolyphosphat flüssig gemäß Anspruch 3 |
| | 10 g | Wasser deionisiert |

| | |
|---|---|
| Hydran® HW930 | Firma DIC |
| Evafanol® HA-107 C | Firma Nicca Chemical Co. |
| Acronal® A 509 (Bindemittel) | Firma BASF |
| Mowilith® LDM 1880 | Firma Celanese |

In den folgenden Tabellen 1 bis 2 sind die Ergebnisse der Laborbrennversuche demonstriert.

### Versuch 1

Es wurden gleich große Streifen aus Baumwollgewebe mit den unterschiedlichen Lösungen getränkt und danach getrocknet. Die trockenen Streifen wurde einer starken Gasflamme mit einer Temperatur von über 500 °C ausgesetzt und ca. 1 Minuten in der Gasbrennerflamme bei ca. 450 bis 600 °C gehalten.

### Baumwollgewebe imprägniert

### Größe 2 cm x 20 cm, Gewicht ca 180 g/m²

| | **Auftragsmenge** | **Brennverhalten** | **Zerstörungs-grad des Gewebes** |
|---|---|---|---|
| **Ammoniumpolyphosphat flüssig** | **60 g/m2 trocken** | **erlischt bei Herausnehmen aus der Flamme** | **Gewebe verbrannt aber Struktur intakt** |
| **Rezeptur 1** | **125 g/m2 trocken** | **erlischt bei Herausnehmen aus der Flamme** | **Gewebe verbrannt aber Struktur intakt** |
| **Rezeptur 2** | **120 g/m2 trocken** | **erlischt bei Herausnehmen aus der Flamme** | **Gewebe verbrannt aber Struktur intakt** |
| **Rezeptur 3** | **125 g/m2 trocken** | **erlischt bei Herausnehmen aus der Flamme** | **Gewebe verbrannt aber Struktur intakt** |

### Versuch 2

### Polyethylen-Gewirke imprägniert, Größe 3 cm x 20 cm, Gewicht ca. 365 g/m²

| | **Auftragsmenge** | **Brennverhalten** | **Zerstörungsgrad des Gewirkes** |
|---|---|---|---|
| **Ammoniumpolyphosphat flüssig** | **130 g/m2 trocken** | **erlischt bei Herausnehmen aus der Flamme** | **Gewirke geschmolzen** |
| **Rezeptur 1** | **220 g/m2 trocken** | **erlischt bei Herausnehmen aus der Flamme** | **Gewirke geschmolzen** |
| **Rezeptur 2** | **220 g/m2 trocken** | **erlischt bei Herausnehmen aus der Flamme** | **Gewirke geschmolzen** |
| **Rezeptur 3** | **230 g/m2 trocken** | **erlischt bei Herausnehmen aus der Flamme** | **Gewirke geschmolzen** |

### Zusammenfassung der Ergebnisse

Das Problem, zur Flammschutzausrüstung ein flüssiges Ammoniumpolyphosphat mit einem Bindemittel zu kombinieren, ohne dass es zu einer Schädigung des Bindemittels in Form einer Koagulation führt, konnte durch das Hinzufügen von Na-Cumolsulfonat gelöst werden.

Die flammhemmenden Eigenschaften des flüssigen Ammoniumpolyphosphates werden dadurch nicht beeinträchtigt. Das System bestehend aus flüssigem APP, Bindemittel und dem erfindungsgemäßen Stabilisator, z.B. p-Cumolsulfonat, lässt sich hervorragend in die Flammschutzbeschichtungszusammensetzungen einarbeiten bzw. solche Zusammensetzungen lassen sich homogen und problemlos auf die Substrate aufbringen.

## Patentansprüche

1. Verwendung des Natrium,- Kalium- und/oder Ammoniumsalzes der p-Cumolsulfonsäure als Bindemittelstabilisator in halogenfreien, flüssigen Ammoniumpolyphosphat enthaltenden
Flammschutzbeschichtungszusammensetzungen, wobei das genannte Salz in Mengen von 1: 10 bis 1: 30, bezogen auf das Bindemittel (Polymerdispersion) in den Zusammensetzungen enthalten ist.

2. Verwendung nach Anspruch 1, **dadurch gekennzeichnet, dass** das Verhältnis von Bindemittel (Polymerdispersion) zu flüssigem Ammoniumpolyphosphat (APP) in der Dispersion 1,3:1 bis 1:5 beträgt.

3. Verwendung nach Anspruch 1, **dadurch gekennzeichnet, dass** das flüssige Ammoniumpolyphosphat (APP) erhältlich ist, in dem man eine Polyphosphorsäure der Zusammensetzung (Hₙ₊₂ Pₙ O₃ₙ₊₁ mit n= 1 bis 50 und einer Phosphationenverteilung von P1 bis P3 bis 20 Gew.- % und P4 bis P50 von 70 bis 90 Gew.-% mit einer wässerigen 10 bis 30 Gew.-%-igen Ammoniaklösung und/oder mit Ammoniakgas bis maximal 60 °C und bis zur Erreichung des pH-Wert Bereiches von 6,5, bis 7,5 vermischt, die so erhaltene Lösung auf Raumtemperatur abkühlt, so dass ein klares, flüssiges Ammoniumpolyphosphat der Formel (NH₄PO₃)n mit n=1 bis 50 und mit einem Feststoffgehalt bis 50 Gew.- % mit einem pH- Wert von 6,5 bis 7,5 und einer Dichte von 1,1 bis 1,3 g/ml und einem P4 bis P50 Anteil von 60 bis 90 Gew.-%, bevorzugt 70 bis 80 Gew.-%, resultiert.

4. Verwendung der Flammschutzbeschichtungszusammensetzungen nach den Ansprüchen 1 bis 3, **dadurch gekennzeichnet, dass** diese Zusammensetzungen durch Tränken, Besprühen, Tauchen, Imprägnieren und Rakeln in einer Menge von 10 bis 500 g /m² auf die Substrate aufgebracht werden.

## Claims

1. Use of the sodium, potassium and/or ammonium salts of p-cumene sulphonate contained as a binder stabiliser in halogen-free, liquid ammonium polyphosphates in flame-retardant coatings, whereby the named salt is contained in quantities of 1:10 to 1:30 with regard to the binder (polymer dispersion) contained in the formulations.

2. Use according to Claim 1 is **characterised by** the ratio of binder (polymer dispersion) to liquid ammonium polyphosphate (APP) contained in the dispersion which ranges from 1.3:1 to 1:5.

3. Use according to Claim 1, **characterised by** the liquid ammonium polyphosphate (APP) being available as a mixture of polyphosphoric acid with the general formulation Hₙ₊₂ Pₙ O₃ₙ₊₁ with n = 1 to 50 and a phosphate ion distribution of P1 to P3 up to 20 wt.% and P4 to P50 of 70 to 90 wt.% with an aqueous 10 to 30 wt.% ammonia solution and/or with ammonia gas up to a maximum 60°C and until a pH range from 6.5 to 7.5 has been reached, whereby the solution thus obtained is allowed to cool down to room temperature, resulting in a clear, liquid ammonium polyphosphate with the formula (NH₄PO₃)ₙ with n=1 to 50 and containing a level of solids of up to 50 wt.%, a pH-value between 6.5 to 7.5 and a density of 1.1 to 1.3 g/ml and a P4 to P50 ratio of between 60 to 90 wt.%, preferably between 70 to 80 wt.%.

4. Use of the flame-retardant coating formulations according to Claims 1 to 3 is **characterised by** these formulations being applied to the substrate using immersion, spraying, dipping, impregnation and blanket coating in amounts of between 10 and up to 500 g/m².

## Revendications

1. Utilisation de sel de sodium, de sel de potassium et/ou de sel d'ammonium issus de l'acide cumènesulfonique-p comme stabilisateur de liant dans des compositions d'agents ignifuges contenant du polyphosphate d'ammonium liquide sans halogène, tout en tenant compte que les sels mentionnés concernant le liant (dispersion de polymères) sont contenus dans les compositions dans une proportion de 1:10 à 1:30.

2. Utilisation selon revendication 1, **caractérisée par le fait que** la proportion entre le liant (dispersion de polymères) et le polyphsophate d'ammonium (PPA) liquide dans la dispersion est de 1,3:1 à 1:5.

3. Utilisation selon revendication 1, **caractérisée par le fait que** le polyphosphate d'ammonium liquide (PPA) est disponible en mélangeant un acide polyphosphorique de la composition (Hₙ₊₂ Pₙ O₃ₙ₊₁ avec n= 1 jusqu'à 50) et une répartition de ions phosphate de P1 à P3 avec 20 % de pourcentage en poids et de P4 à P50 avec 70 à 90 % de pourcentage en poids avec une solution aqueuse d'ammoniac de 10 à 30 de pourcentage en poids et/ou avec du gaz d'ammoniac, jusqu'à une température de 60°C et jusqu'à obtention d'un pH dans une plage de 6,5 à 7,5. La solution ainsi obtenu devra refroidir à température ambiante de sorte qu'il en résulte un polyphosphate d'ammonium clair et liquide avec la formule (NH₄PO₃)n, avec n=1 à 50 et avec une teneur en matières solides jusqu'à 50 de pourcentage en poids avec un pH de 6,5 à 7,5 et une densité de 1,1 à 1,3 g/ml et un taux P4 à P50 de 60 à 90 de pourcentage en poids, tout en privilégiant 70 à 80 de pourcentage en poids.

4. Utilisation de la composition du revêtement ignifuge selon les revendications 1 à 3 **caractérisée par le fait que** la présente composition peut être appliquée par imprégnation, vaporisation, immersion, imprégnation ou enduction à la racle dans un volume de 10 à 500 g/m² sur les substrats.
